# EUROPÄISCHE PATENTSCHRIFT

(11) **EP 2 683 956 B1**
(45) Veröffentlichungstag und Bekanntmachung des Hinweises auf die Patenterteilung: **22.11.2017**
(21) Anmeldenummer: 12703842.0
(22) Anmeldetag: 16.02.2012
(51) Int. Cl.: F16C 33/04, F16C 9/00, F16C 17/02, F16C 33/10

(54) **GLEITLAGERSCHALE MIT EINER SAMMELNUT**
SLIDING BEARING SHELL COMPRISING A COLLECTING GROOVE
COQUILLE DE COUSSINET LISSE À RAINURE COLLECTRICE

(30) Priorität: 11.03.2011 DE 102011005467
(43) Veröffentlichungstag der Anmeldung: 15.01.2014
(73) Patentinhaber: Federal-Mogul Wiesbaden GmbH, 65201 Wiesbaden (DE)
(72) Erfinder: GARNIER, Thierry, 55203 Nierstein (DE)
(74) Vertreter: Mehler Achler
(86) Internationale Anmeldenummer: PCT/EP2012/052664
(87) Internationale Veröffentlichungsnummer: WO 2012/123213

(56) Entgegenhaltungen:
- EP-A1- 1 557 544
- DE-A1- 2 847 246
- DE-A1- 3 825 449
- DE-A1-102006 010 698
- DE-A1-102009 002 772
- US-A- 3 881 788
- US-A1- 2005 196 084

## Beschreibung

Die vorliegende Erfindung betrifft eine Gleitlagerschale mit einer die Gleitlagerschale radial durchsetzenden Ölbohrung zum Einbringen von Öl in die Gleitlagerschale. Typische Anwendungen der gattungsgemäßen Gleitlagerschale sind das Kurbelwellenhauptlager oder das Pleuellager in Verbrennungsmotoren. Gleitlagerschalen der gattungsgemäßen Art sind beispielsweise aus der DE 10 2005 037 502 A1, der DE 101 63 292 A1, der US 2005/196084 A1, der EP 1 557 544, der DE 10 2006 010698 A1, der DE 38 25 449 A1, der DE 10 2009 002 772 A1 oder der DE 28 47 246 A1. Das letzte Dokument offenbart eine Gleitlagerschale nach dem Oberbegriff des Anspruchs 1. Üblicherweise bilden zwei derartige Gleitlagerschalen ein Gleitlager, wobei die darin gelagerte Welle auf einem Ölfilm gleitet, der sich zwischen der Welle selbst und Tragflächen auf der Innenseite der Gleitlagerschalen ausbildet. Um die Ausbildung dieses Ölfilms zwischen der Tragfläche der Gleitlagerschale und der darin gelagerten Welle zu gewährleisten, wird Öl durch die Ölbohrung in die in die Gleitlagerschale eingebracht, insbesondere eingespritzt. Das Öl verteilt sich innerhalb der Gleitlagerschale und benetzt die Tragflächen, auf denen es von der drehenden Welle mitgerissen wird, wodurch sich der Ölfilm bildet, auf dem die Welle gleitet.

Neben der Funktion der Ausbildung des Ölfilms dient das Öl der Kühlung des Gleitlagers, indem es die beim Betrieb entstehende Wärme aus dem Gleitlager ableitet. Die im Betrieb herrschenden Temperaturen liegen zwischen 90°C bei normalen Anwendungen bis 210°C bei extremen Anwendungen wie etwa bei Rennwagen. Etwa ¾ der Ölmenge, die in die Gleitlagerschale eingespritzt wird, dient zur Kühlung.

Das Öl wird mittels einer Ölpumpe in die Gleitlagerschale eingespritzt. Die Ölpumpe wird von einem Motor angetrieben, der das Fahrzeug antreibt. Ein Teil der Leistung, die der Motor abgibt, wird zum Antreiben der Ölpumpe benötigt. Der Anteil der Leistung, die zum Antreiben der Ölpumpe benötigt wird, kann dadurch reduziert werden, dass der Volumenstrom des Öls durch die Ölbohrung gesenkt wird. Mit einer Reduzierung des Anteils der Leistung, die zum Antreiben der Ölpumpe benötigt wird, reduzieren sich auch der Kraftstoffverbrauch und damit auch die CO₂-Emission des Motors.

Einige Gleitlagerschalen weisen Ölnuten auf, mit denen das Öl innerhalb der Gleitlagerschale verteilt wird. Der Volumenstrom ist proportional zur Oberfläche der Ölnut, weshalb man aus den zuvor genannten Gründen bestrebt ist, die Ölnut so gering wie möglich zu gestalten. Die Gleitlagerschale umschließt üblicherweise einen Winkel von 180° in Umfangsrichtung, so dass zwei Gleitlagerschalen die zu lagernde Welle vollständig umfassen. Die Ölnut kann dabei die gesamte Gleitlagerschale durchlaufen, so dass sie sich ebenfalls über einen Winkel von 180° in Umfangsrichtung erstreckt. Um die Oberfläche der Ölnut und damit den Volumenstrom des Öls durch die Ölnut zu reduzieren, kann der Winkel gesenkt werden. Es sind Gleitlager bekannt, deren Ölnut in Umfangsrichtung vor den Teilflächen der Gleitlagerschale ausläuft, vgl. US 2005/196084 A1, EP 1 557 544, DE 10 2006 010698 A1, oder DE 10 2009 002 772 A1, und insbesondere einen Winkel von 150° einschließen, sogar Winkel von 120° werden erprobt. Dabei muss allerdings beachtet werden, dass der Volumenstrom durch die Ölnut nicht zu stark reduziert wird, so dass eine ausreichende Kühlung gewährleistet werden kann.

Mit sich verringerndem Winkel der Ölnut muss die benötigte Menge an Öl über eine geringere Oberfläche in das Gleitlager eingebracht und das Öl über eine größere Fläche verteilt werden, um eine einwandfreie Lagerung zu gewährleisten. Dies führt dazu, dass ein steigender Anteil des Öls seitlich aus dem Gleitlager austritt und ungenutzt verloren geht. Üblicherweise wird eine deutlich größere Menge an Öl in das Gleitlager eingebracht als tatsächlich notwendig, um die einwandfreie Lagerung der Welle zu gewährleisten und einen Ausfall zu vermeiden. Um den hierzu notwendigen Volumenstrom aufzubringen, muss der Motor eine höhere Leistung an die Ölpumpe abgeben, weshalb der Verbrauch des Motors steigt.

Andere Gleitlagerschalen weisen aus unterschiedlichen Gründen zusätzlich zur Ölnut seitlich von dieser angeordnete Rillen oder separate, parallele Schlitze auf, vgl. DE 38 25 449 A1 oder DE 10 2009 002 772 A1.

In der DE 28 47 246 A1 werden die Ölnuten besonders breit ausgebildet. Dies führt zu einer geringeren effektiven Lagerfläche und folglich zu einer Reduzierung der Reibungsenergie.

Aufgabe der vorliegenden Erfindung ist es, die oben diskutierten Nachteile der gattungsgemäßen Gleitlager zumindest zu reduzieren und eine Gleitlagerschale anzugeben, mit welcher das in der Gleitlagerschale befindliche Öl besser genutzt werden kann, so dass der für die Ölpumpe benötigte Anteil der Leistung des Motors und gleichzeitig der seitliche Austritt aus dem Gleitlager reduziert werden kann.

Gelöst wird die Aufgabe durch eine Gleitlagerfläche gemäß Anspruch 1. Unter geschlossener Sammelnut soll eine Nut verstanden werden, in die keine Ölbohrung mündet. Die geschlossene Sammelnut bewirkt innerhalb des Ölfilms eine Querschnittserweiterung, weshalb dem Öl im Bereich der Sammelnut ein größeres geschlossenes Volumen zur Verfügung steht, so dass in der Sammelnut ein Unterdruck erzeugt wird. Folglich bildet sich im Bereich der Sammelnut, wo der Unterdruck anliegt, eine Saugwirkung aus, so dass Öl in diesen Bereich der Sammelnut gesaugt wird und sich eine zur Sammelnut hin gerichtete Strömung im Ölfilm ausbildet. Die Menge an Öl, die seitlich aus dem Gleitlager austritt, wird somit verringert und das Öl erneut genutzt, so dass auch der von der Ölpumpe zu fördernde Volumenstrom an Öl in die Gleitlagerschale reduziert werden kann. Erfindungsgemäß ist die Sammelnut in Drehrichtung der zu lagernden Welle vor der Ölbohrung angeordnet, so dass das gesammelte Öl direkt mit dem frischen, durch die Ölnut hindurchtretenden Öl gemischt und zusammen zum Aufbau des Ölfilms verwendet werden kann. Als Konsequenz reduziert sich der Anteil der Leistung, die der Motor zum Antreiben der Ölpumpe aufbringen muss, wodurch der Verbrauch des Motors und damit seine CO₂-Emission gesenkt werden. Vorzugsweise wird die erfindungsgemäße Gleitlagerschale im Kurbelwellenhauptlager eingesetzt. Die Ölbohrung kann einen kreisförmigen Querschnitt haben und mit einem Bohrer gefertigt werden oder aber auch einen elliptischen Querschnitt haben oder ein Langloch sein und gefräst werden.

Aufgrund der sich auf einer Innenseite der Gleitlagerschale im Wesentlichen in Umfangsrichtung der Gleitlagerschale erstreckenden Verteilernut wird die Verteilung des Öls innerhalb der Gleitlagerschale verbessert, so dass sich überall in der Gleitlagerschale ein gleichmäßiger Ölfilm zum Tragen der Welle ausbilden kann. In diesem Fall ist die Sammelnut in Drehrichtung der Welle vor dieser Verteilernut angeordnet. Weiterhin hat sich herausgestellt, dass bei einem Längen-zu-Breiten-Verhältniss von 10:1 bis 40:1 der Volumenstrom des in das Gleitlager eingebrachten Öls und damit auch der Kraftstoffverbrauch des Motors besonders stark reduziert werden kann.
Vorzugsweise endet die Verteilernut in Umfangsrichtung mit einem ersten Abstand vor einem ersten umfänglichen Ende der Gleitlagerschale. Die Tragfläche und damit die Tragfähigkeit der Gleitlagerschale werden somit vergrößert, wodurch größere Lasten aufgenommen werden können.

In einer bevorzugten Ausgestaltung der erfindungsgemäßen Gleitlagerschale endet die Sammelnut in Umfangsrichtung mit einem zweiten Abstand vor einem zweiten umfänglichen Ende der Gleitlagerschale. Auch hierdurch können die Tragfläche und die Tragfähigkeit weiter vergrößert werden, so dass größere Lasten aufgenommen werden können.

In einer favorisierten Weiterbildung erstrecken sich die Verteilernut mit einem ersten Winkelmaß zwischen 50° und 100° und die Sammelnut mit einem zweiten Winkelmaß zwischen 40° und 80° in Umfangsrichtung. Dabei muss das Winkelmaß jedoch so gewählt werden, dass immer ein bestimmter Abstand zwischen der Verteilernut und der Sammelnut verbleibt. Es hat sich herausgestellt, dass in diesem Bereich des ersten und zweiten Winkelmaßes der Volumenstrom des in das Gleitlager eingebrachten Öls und damit auch der Kraftstoffverbrauch des Motors besonders stark reduziert werden kann.

Vorzugsweise sind die erste und die Sammelnut im Wesentlichen gleich lang. Dies vereinfacht die Fertigung, da die erste und die Sammelnut mit einem identischen Arbeitsschritt gefertigt werden können. Allein die Position der Gleitlagerschale muss verändert werden, wodurch die Gleitlagerschale besonders günstig herstellbar ist.

Vorzugsweise geht zumindest die Sammelnut in Umfangsrichtung mit einem ersten Radius in die Tragfläche oder einem Nutgrund über. Wie oben dargelegt, bildet sich in der Sammelnut ein geringerer Druck im Ölfilm aus, wodurch es zu ein Saugeffekt in der Sammelnut erzeugt wird. Da in dieser Ausbildung die Sammelnut mit einem ersten Radius in die Tragfläche übergeht, entstehen keine oder zumindest weniger Verwirbelungen, welche den Saugeffekt und die Strömung in die Sammelnut stören könnten. Werden sowohl die erste als auch die Sammelnut entsprechend mit einem kreissegmentförmigen Querschnitt gefertigt, wird die Fertigung weiter vereinfacht. Auch der Übergang in den Nutgrund mittels des ersten Radius reduziert die Verwirbelung innerhalb des Ölfilms, so dass sich der Saugeffekt besser entfalten kann.

Es hat sich ebenfalls als besonders vorteilhaft für die Reduzierung des Volumenstroms des in das Gleitlager eingebrachten Öls und des Kraftstoffverbrauchs des Motors herausgestellt, wenn die erste und die Sammelnut jeweils ein Breiten-zu-Tiefen-Verhältnis von 10:1 bis 40:1 aufweisen.

Vorzugsweise geht zumindest die Sammelnut in Umfangsrichtung mit einem ersten Radius in die Tragfläche oder einem Nutgrund über. Wie oben dargelegt, bildet sich in der Sammelnut ein geringerer Druck im Ölfilm aus, wodurch es zu ein Saugeffekt in der Sammelnut erzeugt wird. Da in dieser Ausbildung die Sammelnut mit einem ersten Radius in die Tragfläche übergeht, entstehen keine oder zumindest weniger Verwirbelungen, welche den Saugeffekt und die Strömung in die Sammelnut stören könnten. Werden sowohl die erste als auch die Sammelnut entsprechend mit einem kreissegmentförmigen Querschnitt gefertigt, wird die Fertigung weiter vereinfacht. Auch der Übergang in den Nutgrund mittels des ersten Radius reduziert die Verwirbelung innerhalb des Ölfilms, so dass sich der Saugeffekt besser entfalten kann.

Vorteilhafterweise weist zumindest die Sammelnut in Umfangsrichtung im Wesentlichen kreissegmentförmigen Profilverlauf im Nutgrund mit einem zweiten Radius auf. Der Übergang von der Tragfläche in die Sammelnut entlang der Längsachse ist in dieser Ausbildung sehr sanft ausgestaltet, so dass keine oder zumindest weniger Verwirbelungen im Ölfilm generiert werden, welche den Saugeffekt und die Strömung in die Sammelnut stören könnten. Weiterhin ist die Fertigung der Sammelnut in dieser Ausbildung sehr einfach, da das entsprechende spanabhebende Werkzeug nur gedreht und nicht lateral verschoben werden muss. Die Nuten können beispielsweise mittels eines drehenden Fräskopfes gefertigt werden, der mit seiner Umfangsfläche das Material abträgt. Werden sowohl die Verteilernut als auch die Sammelnut entsprechend mit einem kreissegmentförmigen Querschnitt gefertigt, wird die Fertigung weiter vereinfacht. Die Verwendung "im Wesentlichen kreisförmig" wird deshalb verwendet, dass zum einen ein streng kreisförmiger Profilverlauf aufgrund der üblichen Fertigungsungenauigkeiten nicht herstellbar ist. Zum anderen ist es denkbar, die Ölnuten vor dem Biegen, also im ebenen Zustand der Gleitlagerschale zu fertigen. Ein im ebenen Zustand kreissegmentförmiger Profilverlauf im Nutgrund würde durch das Rollen geometrisch verändert werden und nicht mehr streng kreissegmentförmig verlaufen. Insofern sollen alle Formen, die ausschließlich durch Drehen des spanabhebenden Werkzeugs um eine relativ zur Gleitlagerschale in ihrer Position unveränderliche Achse mit dem Merkmal "in Umfangsrichtung im Wesentlichen kreissegmentförmiger Profilverlauf" umfasst sein.

Bevorzugt geht zumindest die Sammelnut senkrecht zur Umfangsrichtung mit einem dritten Radius in die Tragfläche über. Auch hierdurch werden die Verwirbelungen zumindest reduziert, so dass der Saugeffekt und die Strömung des Öls in die Sammelnut nicht oder weniger stark gestört werden.

Bevorzugt weisen die Verteilernut und die Sammelnut gleiche Profilverläufe in Umfangsrichtung und/oder senkrecht zur Umfangsrichtung auf. Hierdurch wird die Fertigung der Gleitlagerschale vereinfacht, da zur Herstellung der ersten und der zweiten Nut dasselbe Werkzeug verwendet werden kann. Das Umrüsten des Werkzeughalters oder das Vorsehen eines zweiten Werkzeughalters können entfallen.

Eine Weiterbildung der erfindungsgemäßen Gleitlagerschale zeichnet sich dadurch aus, dass die Verteilernut und Sammelnut mittels eines Kanals verbunden sind. Dieser Kanal weist vorzugsweise einen deutlich kleineren Querschnitt als die Verteilernut und die Sammelnut auf, so dass der Saugeffekt nur unwesentlich beeinträchtigt wird. Im Kanal kann sich Öl sammeln, welches bei Bedarf zur Verfügung steht. Durch die Drehbewegung der Welle wird das im Kanal gesammelte Öl mitgeschleppt und bildet einen Ölkeil, mit dem die Tragfähigkeit des Gleitlagers erhöht werden kann.

Die Erfindung wird im Folgenden unter Bezugnahme auf die anhängenden Zeichnungen anhand von bevorzugten Ausführungsbeispielen im Detail erläutert. Es zeigen
- Figur 1: ein erstes Ausführungsbeispiel einer erfindungsgemäßen Gleitlagerschale im abgewickelten Zustand,
- Figur 2: das in Figur 1 gezeigte Ausführungsbeispiel in einer perspektivischen Darstellung,
- Figur 3: ein zweites Ausführungsbeispiel der erfindungsgemäßen Gleitlagerschale anhand einer Draufsicht im abgewickelten Zustand,
- Figur 4: eine Schnittdarstellung des in Figur 3 dargestellten Ausführungsbeispiels entlang der in Figur 3 definierten Schnittebene A-A,
- Figur 5: ein drittes Ausführungsbeispiel der erfindungsgemäßen Gleitlagerschale anhand einer Schnittdarstellung analog zu in Figur 4 verwendeten Darstellung im abgewickelten Zustand,
- Figur 6: eine Schnittdarstellung des zweiten Ausführungsbeispiels entlang der in Figur 3 definierten Schnittebene B-B,
- Figur 7: das in Figur 5 gezeigte dritte Ausführungsbeispiel im gerollten Zustand,
- Figur 8: eine nicht erfindungsgemäße Gleitlagerschale anhand einer Draufsicht im abgewickelten Zustand, und
- Figur 9: ein letztes Ausführungsbeispiel der erfindungsgemäßen Gleitlagerschale anhand einer Draufsicht im abgewickelten Zustand.

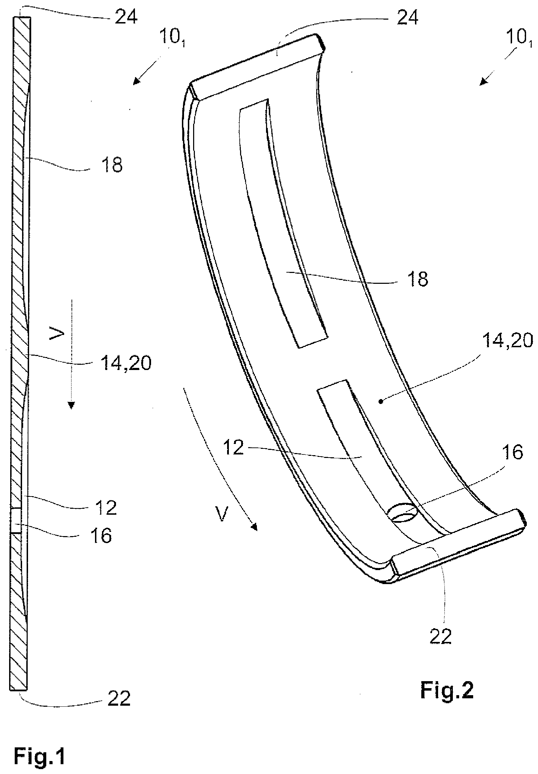

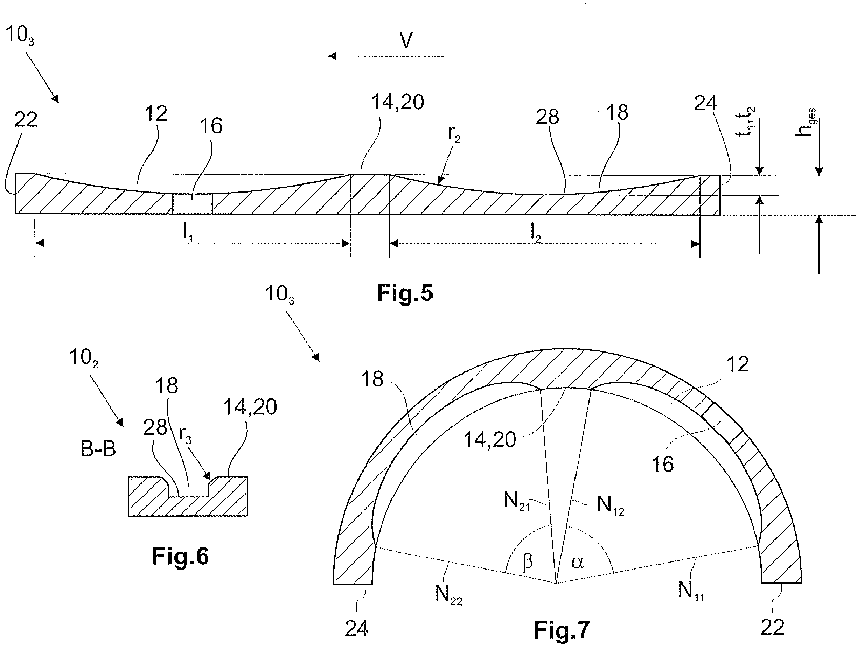

Das in Figur 1 dargestellte erste Ausführungsbeispiel einer erfindungsgemäßen Gleitlagerschale 10₁ ist im abgewickelten, ebenen Zustand anhand einer Schnittdarstellung gezeigt. Bei der Herstellung eines Gleitlagers erfolgt ein Biegeschritt, mit dem die ebene Gleitlagerschale 10₁ gebogen wird, so dass sie eine Halbschale bildet, die einen Winkel von etwa 180° überstreicht (vgl. Figur 7). Zwei Gleitlagerschalen 10₁ bilden ein komplettes Lager, wobei die beiden Gleitlagerschalen nicht notwendigerweise identisch aufgebaut sein müssen.

In Figur 2 ist das erste Ausführungsbeispiel der Gleitlagerschale 10₁ anhand einer perspektivischen Darstellung gezeigt. Sie ist bereits gebogen und kann somit bereits mit einer zweiten Gleitlagerschale zum Lagern einer nicht dargestellten Welle eingesetzt werden.

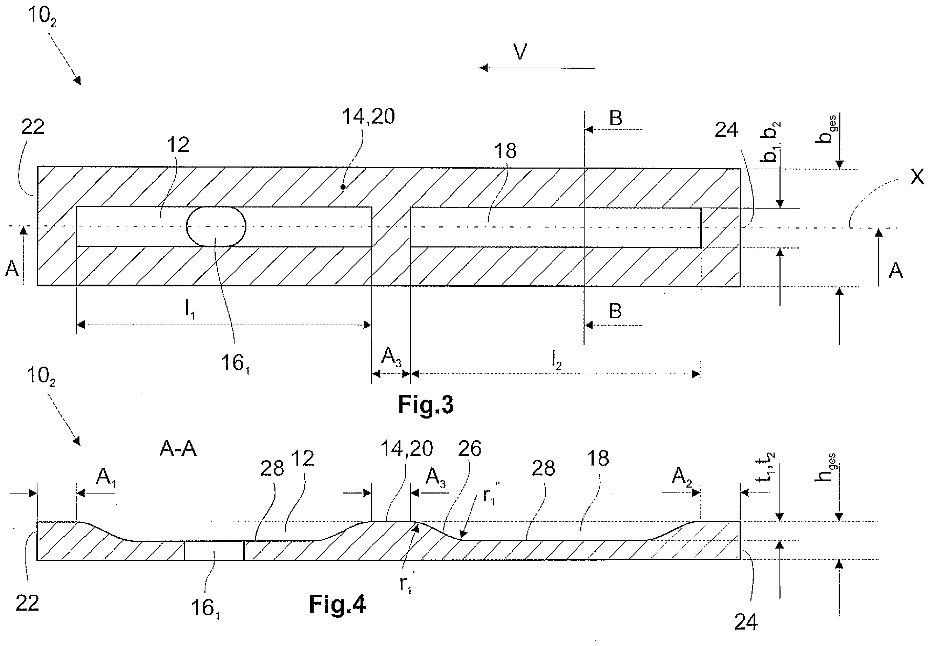

Die Gleitlagerschale 10₁ umfasst eine Verteilernut 12, die sich auf einer Innenseite 14 der Gleitlagerschale 10₁ in Umfangsrichtung der Gleitlagerschale 10₁ erstreckt. Zur Definition der Umfangsrichtung ist diese in Figur 3 mit der Linie X gekennzeichnet. Die größte Erstreckung der Verteilernut 12 soll in Umfangsrichtung verlaufen. In der Verteilernut 12 ist eine Ölbohrung 16 vorgesehen, welche die Gleitlagerschale 10₁ radial durchsetzt und durch welche Öl mittels einer nicht dargestellten Ölpumpe in die Verteilernut 12 gefördert oder eingespritzt werden kann.

Weiterhin weist die Gleitlagerschale 10₁ eine Sammelnut 18 auf, welche sich ebenfalls auf der Innenseite 14 und in Umfangsrichtung der Gleitlagerschale 10₁ erstreckt. Die diesbezüglichen Ausführungen zur Erstreckung der Verteilernut 12 gelten für die Sammelnut 18 entsprechend. Die Sammelnut 18 ist ringsum geschlossen und von einer Tragfläche 20 umgeben. Als Tragfläche 20 dient jede Fläche der Innenseite 14 der Gleitlagerschale 10₁, auf der sich ein Ölfilm zum Lagern und Gleiten einer nicht dargestellten Welle ausbilden kann. Die Drehrichtung der Welle ist mit dem Pfeil V dargestellt. Es ist somit ersichtlich, dass die Sammelnut 18 in Drehrichtung der Welle gesehen vor der Verteilernut 12 angeordnet ist.

In Figur 3 ist ein zweites Ausführungsbeispiel 10₂ der erfindungsgemäßen Gleitlagerschale anhand einer Draufsicht dargestellt, die sich im Wesentlichen von den Dimensionen vom ersten Ausführungsbeispiel unterscheidet. Die Gleitlagerschale 10₂ weist eine Gesamtbreite b_{ges} und eine Gesamthöhe h_{ges} (vgl. Figur 4) auf. Die Verteilernut 12 weist einen ersten Abstand A₁ von einem ersten umfänglichen Ende 22 und die Sammelnut 18 einen zweiten Abstand A₂ von einem zweiten umfänglichen Ende 24 der Gleitlagerschale 10₁ auf. Die Verteilernut 12 und die Sammelnut 18 weisen einen dritten Abstand A₃ zwischen ihren jeweiligen zueinander weisenden Enden auf und sind somit in Umfangsrichtung hintereinander angeordnet. Der Übersichtlichkeit halber ist die Tragfläche 20 schraffiert dargestellt, welche die Verteilernut 12 und Sammelnut 18 ringsum umschließt. Im Gegensatz zum in Figur 1 dargestellten Ausführungsbeispiel ist die Ölbohrung 16₁ als Langloch ausgestaltet.

Die Verteilernut 12 weist eine erste Länge l₁, eine erste Breite b₁ sowie eine erste Tiefe t₁ und die Sammelnut 18 weist eine zweite Länge l₂, eine zweite Breite b₂ sowie eine zweite Tiefe t₂ auf. Die Tiefen sollen dabei den maximalen Abstand zwischen der die Verteilernut 12 und die Sammelnut 18 umgebenden Tragfläche 20 und einem Nutgrund 28 angeben. Gemäß dem zweiten Ausführungsbeispiel besitzen die Verteilernut 12 und die Sammelnut 18 identische Abmessungen, so dass die Längen l₁ und l₂, die Breiten b₁ und b₂ sowie die Tiefen t₁, t₂ jeweils gleich sind.

Wie aus Figur 4 hervorgeht, gehen die Verteilernut 12 und die Sammelnut 18 in Umfangsrichtung mit einem ersten Radius r₁' von der Tragfläche 20 in einen gegenüber der Tragfläche 20 geneigten Abschnitt 26 über. Der geneigte Abschnitt 26 geht ebenfalls mit dem ersten Radius r₁" in den Nutgrund 28 der Verteilernut 12 und der Sammelnut 18 über. Die ersten Radien r₁', r₁" können identisch oder unterschiedlich sein. Weiterhin können die Verteilernut 12 und/oder die Sammelnut 18 ohne den ersten Radius r₁ gefertigt sein.

In Figur 6 ist die Gleitlagerschale 10₂ gemäß dem zweiten Ausführungsbeispiel entlang der in Figur 3 definierten Schnittebene B-B dargestellt. Die Sammelnut 18 geht senkrecht zur Umfangsrichtung mit einem dritten Radius r₃ in die Tragfläche 20 über. Im dargestellten Beispiel stößt die Sammelnut 18 senkrecht auf den Nutgrund 28, wobei auch hier ein Übergang mit dem dritten Radius r₃ oder einem anderen Radius denkbar ist. Selbstverständlich können auch andere Übergänge, beispielsweise als Fase, vorgesehen werden.

In Figur 5 ist ein zweites Ausführungsbeispiel der erfindungsgemäßen Gleitlagerschale 10₃ analog zur in Figur 1 gewählten Darstellungsweise gezeigt. Der Aufbau des dritten Ausführungsbeispiels unterscheidet sich vom ersten im Wesentlichen dadurch, dass die Verteilernut 12 und die Sammelnut 18 in Umfangsrichtung einen kreissegmentförmigen Profilverlauf mit einem zweiten Radius r₂ aufweisen. Die Profilverläufe der Verteilernut 12 und der Sammelnut 18 sind identisch, so dass auch die Längen in und l₂ gleich sind.

In Figur 7 ist die Gleitlagerschale 10₃ gemäß dem dritten Ausführungsbeispiel im gerollten und damit einbaufähigen Zustand dargestellt, in welchem sie einen Winkel von ca. 180° zwischen dem ersten umfänglichen Ende 22 und dem zweiten umfänglichen Ende 24 überstreicht. Man erkennt weiterhin, dass sich im gerollten Zustand die Verteilernut 12 mit einem ersten Winkelmaß α und die Sammelnut 18 mit einem zweiten Winkelmaß β in Umfangsrichtung erstrecken, so dass sich die Winkelmaße ausschließlich auf den hier gezeigten gerollten Zustand der Gleitlagerschale 10₃ beziehen.

Das Winkelmaß entspricht dem Winkel, der von zwei Normalen N eingeschlossen wird, die von den jeweiligen Enden der Verteilernut 12 und der Sammelnut 18 ausgehen und in derselben Schnittebene liegen. In Figur 7 sind dies die Normalen N₁₁ bis N₂₂, wobei das Winkelmaß der Verteilernut 12 von den Normalen N₁₁ und N₁₂ und das der Sammelnut 18 von den Normalen N₂₁ und N₂₂ beschrieben wird. Die Verteilernut 12 und die Sammelnut 18 enden an der Stelle, an der sie in die Tragfläche 20 übergehen. Da die Längen l₁, l₂ der Sammelnut 12 und der Verteilernut 18 gleich sind (vgl. Figur 5), sind auch das erste und zweite Winkelmaß α*,* β gleich, wobei hier auch andere Abmessungen vorgesehen werden können.

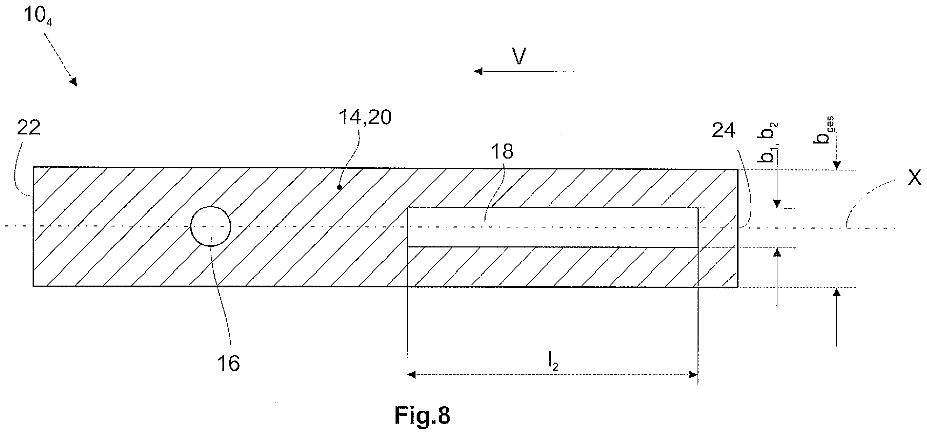

In Figur 8 ist eine nicht erfindungsgemäße Gleitlagerschale 10₄ anhand einer Draufsicht im abgewickelten, ebenen Zustand dargestellt. Diese Gleitlagerschale 10₄ weist keine Verteilernut auf. Stattdessen geht die Ölbohrung 16 direkt in die Tragfläche 20 über.

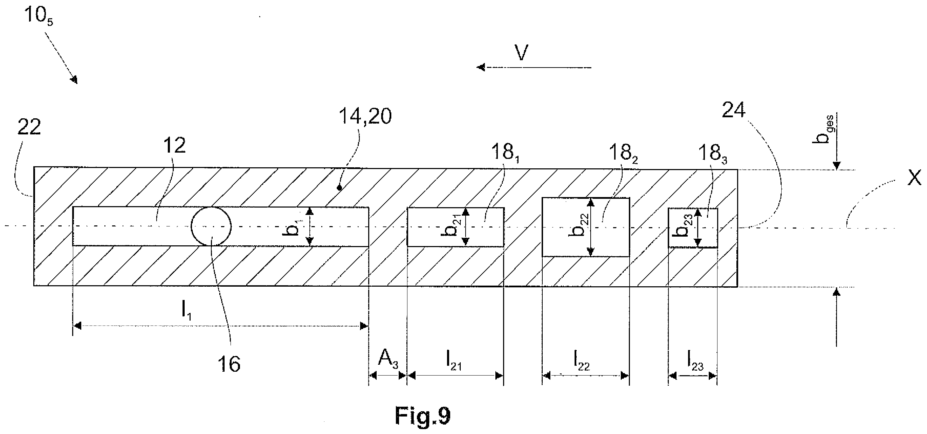

In Figur 9 ist ein letztes Ausführungsbeispiel der erfindungsgemäßen Gleitlagerschale 10₅ anhand einer Draufsicht im abgewickelten, ebenen Zustand dargestellt. In diesem Ausführungsbeispiel umfasst die Gleitlagerschale 10₅ mehrere Sammelnuten, in diesem Fall drei Sammelnuten 18₁ bis 18₃, die jeweils unterschiedliche Längen l₂₁ bis l₂₃ sowie unterschiedliche Breiten b₂, bis b₂₃ aufweisen.

In allen Ausführungsbeispielen sind die Sammelnuten 18 bezogen auf die Drehrichtung der Welle, die mit den Pfeilen V gekennzeichnet ist, vor der Ölbohrung 16 bzw. der Verteilernut 12 angeordnet. Dies hat den Effekt, dass das in der Sammelnut 18 gesammelte Öl infolge der Drehung und der damit verbundenen Schleppwirkung der Welle der Ölbohrung 16 oder der Verteilernut 12 zugeführt wird. Insofern wird das bereits in der Gleitlagerschale 10 befindliche Öl mit frischem Öl, welches durch die Ölbohrung in die Gleitlagerschale 10 eingebracht wird, zusammengebracht und kann wiederverwendet werden. Das Volumen des frischen Öls kann um das Volumen des in der Sammelnut 18 gesammelten Öls verringert werden, so dass das insgesamt benötigte Ölvolumen verringert werden kann. Infolgedessen muss die Ölpumpe einen geringeren Volumenstrom fördern, so dass sie weniger Leistung benötigt, was zu einer Kraftstoffersparnis des antreibenden Motors führt. Die CO₂-Bilanz wird entsprechend verbessert.

### Bezugszeichenliste

- 10₁ - 10₅: Gleitlagerschale
- 12: Verteilernut
- 14: Innenseite
- 16, 16₁: Ölbohrung
- 18: Sammelnut

- 20: Tragfläche
- 22: erstes umfängliches Ende
- 24: zweites umfängliches Ende
- 26: geneigter Abschnitt
- 28: Nutgrund

- A₁ - A₃: Abstand
- b₁: Breite Verteilernut
- b₂: Breite Sammelnut
- b_{ges}: Breite Gleitlagerschale
- h_{ges}: Höhe Gleitlagerschale
- l₁: Länge Verteilernut
- l₂: Länge Sammelnut
- N₁₁ - N₂₂: Normalen
- r₁ - r₃: Radien
- t₁: Tiefe Verteilernut
- t₂: Tiefe Sammelnut
- X: Linie, welche die Umfangsrichtung definiert

- α: erstes Winkelmaß
- β: zweites Winkelmaß

## Patentansprüche

1. Gleitlagerschale in Form einer Halbschale, die einen Winkel von etwa 180° überstreicht, mit
einer die Gleitlagerschale radial durchsetzenden Ölbohrung (16) zum Einbringen von Öl in die Gleitlagerschale
und mit einer sich auf einer Innenseite (14) der Gleitlagerschale (10) im Wesentlichen in Umfangsrichtung der Gleitlagerschale (10) erstreckende Verteilernut (12) zum Verteilen des eingebrachten Öls innerhalb der Gleitlagerschale, wobei die Ölbohrung (16) in die Verteilernut (12) mündet, wobei die Gleitlagerschale eine oder mehrere sich auf der Innenseite (14) der Gleitlagerschale (10) in Umfangsrichtung erstreckende Sammelnuten (18) zum Sammeln des in der Gleitlagerschale befindlichen Öls aufweist, wobei die eine oder mehrere Sammelnuten (18) geschlossen und ringsum von einer Tragfläche (20) umgeben sind, wobei die Verteilernut (12) und die eine oder mehrere Sammelnuten (18) in Umfangsrichtung hintereinander angeordnet sind, **dadurch gekennzeichnet, dass** die Verteilernut (12) und die eine oder mehrere Sammelnuten (18) jeweils ein Längenzu-Breiten-Verhältnis von 10:1 bis 40:1 aufweisen.

2. Gleitlagerschale nach Anspruch 1, **dadurch gekennzeichnet,**
**dass** die Verteilernut (12) in Umfangsrichtung mit einem ersten Abstand (A₁) vor einem ersten umfänglichen Ende (22) der Gleitlagerschale (10) endet.

3. Gleitlagerschale nach einem der vorherigen Ansprüche, **dadurch gekennzeichnet, dass** die Sammelnut (18) in Umfangsrichtung mit einem zweiten Abstand (A₂) vor einem zweiten umfänglichen Ende (24) der Gleitlagerschale (10) endet.

4. Gleitlagerschale nach einem der vorherigen Ansprüche, **dadurch gekennzeichnet, dass** sich die Verteilernut (12) mit einem ersten Winkelmaß (α) zwischen 50° und 100° und die Sammelnut (18) mit einem zweiten Winkelmaß (β) zwischen 40° und 80° in Umfangsrichtung erstrecken.

5. Gleitlagerschale nach einem der vorherigen Ansprüche, **dadurch gekennzeichnet, dass** die Verteilernut (12) und die Sammelnut (18) im Wesentlichen gleich lang sind.

6. Gleitlagerschale nach einem der vorherigen Ansprüche, **dadurch gekennzeichnet, dass** die Verteilernut (12) und die Sammelnut (18) jeweils ein Breiten-zu-Tiefen-Verhältnis von 10:1 bis 40:1 aufweisen.

7. Gleitlagerschale nach einem der vorherigen Ansprüche, **dadurch gekennzeichnet, dass** zumindest die Sammelnut (18) in Umfangsrichtung mit einem ersten Radius (r₁) in die Tragfläche (20) und/oder in einen Nutgrund (28) übergeht.

8. Gleitlagerschale nach einem der vorherigen Ansprüche, **dadurch gekennzeichnet, dass** zumindest die Sammelnut (18) in Umfangsrichtung einen im Wesentlichen kreissegmentförmigen Profilverlauf am Nutgrund (28) mit einem zweiten Radius (r₂) aufweist.

9. Gleitlagerschale nach einem der vorherigen Ansprüche, **dadurch gekennzeichnet, dass** zumindest die Sammelnut (18) senkrecht zur Umfangsrichtung mit einem dritten Radius (r₃) in die Tragfläche (20) übergeht.

10. Gleitlagerschale nach einem der vorherigen Ansprüche, **dadurch gekennzeichnet, dass** die Verteilernut (12) und die Sammelnut (18) gleiche Profilverläufe in Umfangsrichtung und/oder senkrecht zur Umfangsrichtung aufweisen.

## Claims

1. Plain bearing shell in the shape of a half shell, which covers an angle of approximately 180°, comprising
an oil hole (16) which radially passes through the plain bearing shell and is intended for introducing oil into the plain bearing shell,
and comprising a distribution groove (12) which extends on an inner side (14) of the plain bearing shell (10) substantially in the peripheral direction of the plain bearing shell (10) and is intended for distributing the oil that has been introduced within the plain bearing shell, the oil hole (16) leading into the distribution groove (12),
the plain bearing shell comprising one or more collection grooves (18) which extend on the inner side (14) of the plain bearing shell (10) in the peripheral direction and are intended for collecting the oil that is inside the plain bearing shell, the one or more collection grooves (18) being closed and peripherally surrounded by a bearing surface (20),
the distribution groove (12) and the one or more collection grooves (18) being arranged one behind the other in the peripheral direction,
**characterised in that** the distribution groove (12) and the one or more collection grooves (18) each have a length-to-width ratio of from 10:1 to 40:1.

2. Plain bearing shell according to claim 1, **characterised in that** the distribution groove (12) ends in the peripheral direction at a first distance (A₁) from a first peripheral end (22) of the plain bearing shell (10).

3. Plain bearing shell according to any one of the preceding claims, **characterised in that** the collection groove (18) ends in the peripheral direction at a second distance (A₂) from a second peripheral end (24) of the plain bearing shell (10).

4. Plain bearing shell according to any one of the preceding claims, **characterised in that** the distribution groove (12) extends in the peripheral direction at a first angle (α) of between 50° and 100°, and the collection groove (18) extends in the peripheral direction at a second angle (β) of between 40° and 80°.

5. Plain bearing shell according to any one of the preceding claims, **characterised in that** the distribution groove (12) and the collection groove (18) are of substantially the same length.

6. Plain bearing shell according to any one of the preceding claims, **characterised in that** the distribution groove (12) and the collection groove (18) each have a width-to-depth ratio of from 10:1 to 40:1.

7. Plain bearing shell according to any one of the preceding claims, **characterised in that** at least the collection groove (18) transitions into the bearing surface (20) and/or into a groove base (28) in the peripheral direction at a first radius (r₁).

8. Plain bearing shell according to any one of the preceding claims, **characterised in that** at least the collection groove (18) has a profile curve that is substantially in the shape of a circular segment on the groove base (28) in the peripheral direction at a second radius (r₂).

9. Plain bearing shell according to any one of the preceding claims, **characterised in that** at least the collection groove (18) transitions into the bearing surface (20) perpendicularly to the peripheral direction at a third radius (r₃).

10. Plain bearing shell according to any one of the preceding claims, **characterised in that** the distribution groove (12) and the collection groove (18) have identical profile curves in the peripheral direction and/or perpendicularly to the peripheral direction.

## Revendications

1. Coquille de coussinet lisse sous la forme d'une demi-coquille qui couvre un angle d'environ 180°,
avec un orifice de passage d'huile (16) traversant radialement la coquille de coussinet lisse et destiné à l'introduction d'huile dans la coquille de coussinet lisse.
et avec une rainure distributrice (12) s'étendant pour l'essentiel dans la direction périphérique de la coquille de coussinet lisse (10) sur un côté intérieur (14) de la coquille de coussinet lisse (10) et destinée à distribuer à l'intérieur de la coquille de coussinet lisse l'huile introduite, sachant que l'orifice de passage d'huile (16) débouche dans la rainure distributrice (12),
sachant que la coquille de coussinet lisse présente une ou plusieurs rainures collectrices (18) s'étendant en direction périphérique sur le côté intérieur (14) de la coquille de coussinet lisse (10) et destinées à collecter l'huile se trouvant dans la coquille de coussinet lisse,
sachant que la ou les rainures collectrices (18) sont fermées et entourées sur tout le pourtour par une surface de support (20),
sachant que la rainure distributrice (12) et la ou les rainures collectrices (18) sont disposées les unes à la suite des autres en direction périphérique,
**caractérisée en ce que** la rainure distributrice (12) et la ou les rainures collectrices (18) présentent chacune un rapport de la longueur à la largeur de 10:1 à 40:1.

2. Coquille de coussinet lisse selon la revendication 1, **caractérisée en ce que** la rainure distributrice (12) se termine, en direction périphérique, à une première distance (A₁) avant une première extrémité périphérique (22) de la coquille de coussinet lisse (10).

3. Coquille de coussinet lisse selon l'une des revendications précédentes, **caractérisée en ce que** la rainure collectrice (18) se termine, en direction périphérique, à une deuxième distance (A₂) avant une deuxième extrémité périphérique (24) de la coquille de coussinet lisse (10).

4. Coquille de coussinet lisse selon l'une des revendications précédentes, **caractérisée en ce que** la rainure distributrice (12) s'étend en direction périphérique avec une première dimension angulaire (α) comprise entre 50° et 100°, et la rainure collectrice (18) s'étend en direction périphérique avec une deuxième dimension angulaire (β) comprise entre 40° et 80°.

5. Coquille de coussinet lisse selon l'une des revendications précédentes, **caractérisée en ce que** la rainure distributrice (12) et la rainure collectrice (18) sont pour l'essentiel de même longueur.

6. Coquille de coussinet lisse selon l'une des revendications précédentes, **caractérisée en ce que** la rainure distributrice (12) et la rainure collectrice (18) présentent chacune un rapport de la longueur à la profondeur de 10:1 à 40:1.

7. Coquille de coussinet lisse selon l'une des revendications précédentes, **caractérisée en ce qu'**au moins la rainure collectrice (18) se raccorde, en direction périphérique, avec un premier rayon (r₁) à la surface de support (20) et/ou à un fond de rainure (28).

8. Coquille de coussinet lisse selon l'une des revendications précédentes, **caractérisée en ce qu'**au moins la rainure collectrice (18) présente, en direction périphérique, une allure de profil pour l'essentiel en forme de segment de cercle sur le fond de rainure (28) avec un deuxième rayon (r₂).

9. Coquille de coussinet lisse selon l'une des revendications précédentes, **caractérisée en ce qu'**au moins la rainure collectrice (18) se raccorde, perpendiculairement à la direction périphérique, avec un troisième rayon (r₃) à la surface de support (20).

10. Coquille de coussinet lisse selon l'une des revendications précédentes, **caractérisée en ce que** la rainure distributrice (12) et la rainure collectrice (18) présentent des allures de profil identiques en direction périphérique et/ou perpendiculairement à la direction périphérique.
